# EUROPÄISCHE PATENTANMELDUNG

(11) **EP 1 037 082 A1**
(43) Veröffentlichungstag der Anmeldung: **20.09.2000**
(21) Anmeldenummer: 00440051.1
(22) Anmeldetag: 21.02.2000
(51) Int. Cl.: G02B 6/44

(54) **Metallfreies optisches Kabel**

(30) Priorität: 10.03.1999 DE 19910653
(71) Anmelder: ALCATEL, 75008 Paris (FR)
(72) Erfinder: Pastuska, Stefan, Dr., 69198 Schriesheim (DE)
(74) Vertreter: Rausch, Gabriele, Dr.

(57) **Zusammenfassung**

Bei einem metallfreien optischen Kabel (1), bestehend aus einem Zentralelement (2), einer Lage aus auf dem Zentralelement (2) aufliegenden optischen Adern (3) sowie einem Außenmantel (5) aus Kunststoff, besteht das Zentralelement (2) aus einem Kern (2a) aus faserverstärktem Kunststoff, auf welchem eine Lage (2b) aus Garnen aus hochzugfestem Kunststoff aufliegt.

## Beschreibung

Die Erfindung betrifft ein metallfreies optisches Kabel nach dem Oberbegriff des Anspruchs 1.

Kabel der eingangs erwähnten Art bestehen aus einem nichtmetallischen Zentralelement, auf welches Röhrchen mit Lichtwellenleitern in ihrem Innern - sogenannte Adern-aufgeseilt werden, wobei entweder eine Umseilung oder eine Aufseilung, bei welcher die Röhrchen mit wechselnder Schlagrichtung auf das Zentralelement aufgeseilt werden, gewählt wird. Auf dieses Gebilde wird dann üblicherweise eine Bandbewicklung und abschließend ein Kunststoffmantel aufgebracht.

Zentralelemente aus Stahl besitzen eine hohe Zugfestigkeit sowie eine hohe Stauchstabilität. Nachteilig wirkt sich aus, daß die Biegbarkeit von optischen Kabeln mit einem Stahldrahtzentralelement nicht sehr gut ist. Ein weiterer Nachteil ist, daß Kabel mit metallischen Anteilen nicht in der Nähe von Hochspannungsanlagen verlegt werden können. Darüberhinaus ist Stahl gegenüber Kunststoff wesentlich schwerer.

Nichtmetallische Zentralelemente bestehen in der Regel aus faserverstärktem Kunststoff, z. B. glasfaserverstärktem Kunststoff. Diese verhalten sich ähnlich wie solche aus Stahl, weisen aber eine geringere Zugbelastbarkeit auf.

Aus diesem Grund ist bei einem optischen Kabel mit einem Zentralelement aus glasfaserverstärktem Kunststoff eine Lage aus Aramidgarnen über den Adern angeordnet, welche die Zugbelastbarkeit des Kabels verbessern soll. Eine solche in den äußeren Bereichen des Kabels angeordnete Lage aus zugfesten Garnen, d. h. aus Garnen mit einer geringen Dehnung, verschlechtert sowohl die Biegbarkeit des Kabels, als auch den Zugriff auf die Adern bei der Installation.

Der Erfindung liegt die Aufgabe zugrunde, ein metallfreies optisches Kabel bereitzustellen, welches die geschilderten Nachteile nicht aufweist und bei einer hohen Zugbelastbarkeit und hoher Stauchstabilität eine gute Biegbarkeit aufweist.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

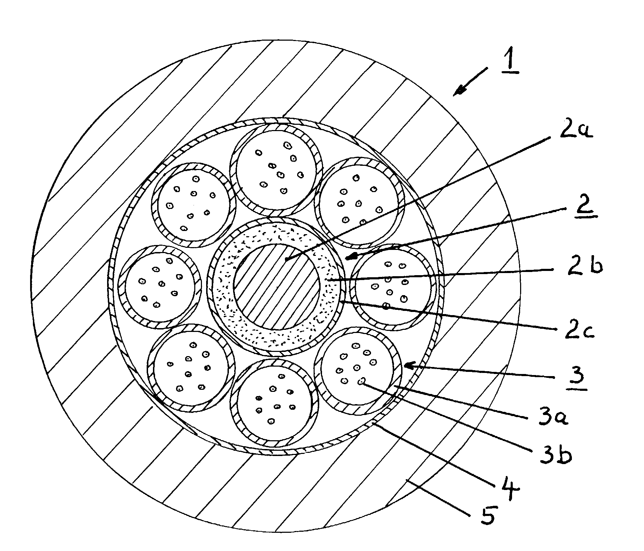

Die Erfindung ist anhand des in der Figur schematisch dargestellten Ausführungsbeispiels näher erläutert.

Die Figur zeigt einen Schnitt durch ein optisches Kabel 1, bestehend aus einem Zentralelement 2, auf welches Bündeladern 3 aufgeseilt sind. Die Bündeladern 3 bestehen aus einer Aderhülle 3a, in welcher die Lichtwellenleiter 3b angeordnet sind. Die Aderhülle 3a kann mit einem eine Längswasserwanderung verhindernden Gel gefüllt sein. Die Bündeladern 3 können um das Zentralelement 2 herumgeseilt oder nach Art der SZ-Verseilung mit wechselnder Schlagrichtung auf das Zentralelement aufgeseilt sein.

Über den Bündeladern 3 befindet sich eine Umwicklung 4, die aus einem Kunststoff- oder Papierband oder aus ähnlichem Material besteht. Das Band kann mit einem Material beschichtet sein, welches bei Zutritt von Wasser aufquillt und dabei die Zwickel zwischen den Bündeladern 3, dem Zentralelement 2 und der Umwicklung 4 ausfüllt.

Weiterhin können die Zwickelräume auch mit einer eine Längswasserwanderung verhindernden Masse auf der Basis von Petroleumjelly gefüllt sein.

Auf der Umwicklung 4 befindet sich der Außenmantel 5 aus Kunststoff, vorzugsweise aus Polyethylen.

Gemäß der Erfindung besteht das Zentralelement 2 aus einem inneren Kern 2a aus faserverstärktem Kunststoff. Bevorzugt wird hierfür ein gasfaserverstärkter Kunststoff auf der Basis von Epoxydharz, Polyester oder Vinylester verwendet. Der Kern 2a ist in Bezug auf seinen Durchmesser auf die zu erwartende Stauchstabilität auszulegen. Üblicherweise liegt der Anteil der in längsaxialer Richtung verlaufenden Glasfasern über den Querschnitt gesehen bei mehr als 70 %.

Auf den Kern 2a ist eine Lage 2b aus in Längsrichtung des Zentralelementes 2 verlaufenden Fasern aus Aramid aufgebracht werden, welche unter dem Handelsnamen Kevlar (eingetragenes Warenzeichen der Firma Dupont) oder Twaron erhältlich sind. Die Fasern können in eine Kleberschicht eingebettet sein. Die Wanddicke der Lage 2b bzw. die Anzahl der Fasern wird bestimmt durch die gewünschte Zugfestigkeit bzw. Zugbelastbarkeit des optischen Kabels 1.

Auf die Lage 2b kann noch eine Schicht 2c aus einem geeigneten Kunststoff durch Extrusion aufgebracht werden. Darüber oder an Stelle der Schicht 2c kann eine Lage aus einem Band vorgesehen sein, welches bei Zutritt von Feuchtigkeit aufquillt, wodurch die Zwickel ausgefüllt werden und das Kabel abgedichtet wird.

Das Kabel gemäß der Lehre der Erfindung kann als Erd- oder Luftkabel eingesetzt werden. Das Zentralelement 2 bietet einen guten Stauchschutz und gleichzeitig eine gute Zugentlastung. Das Kabel weist eine geringere Querschnittsfläche im Vergleich zu herkömmlichen Kabeln auf, da die Kevlarschicht in das Zentralelement einbezogen ist und nicht als periphere Schicht über den Adern gelegen ist. Dadurch verbessert sich auch der Zugriff zu den Adern.

## Patentansprüche

1. Metallfreies optisches Kabel (1), bestehend aus einem Zentralelement (2), einer Lage aus auf dem Zentralelement (2) aufliegenden optischen Adern (3) sowie einem Außenmantel (5) aus Kunststoff, dadurch gekennzeichnet, daß das Zentralelement (2) aus einem Kern (2a) aus faserverstärktem Kunststoff besteht, auf welchem eine Lage (2b) aus Garnen aus hochzugfestem Kunststoff aufliegt.

2. Optisches Kabel nach Anspruch 1, dadurch gekennzeichnet, daß der Kern (2a) aus glasfaserverstärktem Kunststoff besteht.

3. Optisches Kabel nach Anspruch 1 oder 2, dadurch gekennzeichnet, daß die Garne aus Aramid bestehen.

4. Optisches Kabel nach einem der Ansprüche 1 bis 3, dadurch gekennzeichnet, daß die Lage (2b) aus Garnen in einer Kleberschicht eingebettet ist.

5. Optisches Kabel nach einem der Ansprüche 1 bis 4, dadurch gekennzeichnet, daß die Lage (2b) aus Garnen von einer Kunststoffschicht (2c)umgeben ist.

6. Optisches Kabel nach Anspruch 5, dadurch gekennzeichnet, daß die Kunststoffschicht (2c) durch Extrusion erzeugt ist.

7. Optisches Kabel nach einem der Ansprüche 1 bis 6, dadurch gekennzeichnet, daß zwischen den optischen Adern (3) und dem Außenmantel (5) aus Kunststoff eine Umwicklung (4) aus Papier, Kunststoffband oder Quellvlies angeordnet ist.

8. Optisches Kabel nach einem der Ansprüche 1 bis 7 dadurch gekennzeichnet, daß die zwischen dem Zentralelement (2) und der Umwicklung (4) bzw. dem Außenmantel (5) befindlichen Zwickelräume mit einem eine Längswasserwanderung verhindernden Material gefüllt sind.
